# NEUE EUROPÄISCHE PATENTSCHRIFT

(11) **EP 2 548 086 B2**
(45) Veröffentlichungstag und Bekanntmachung des Hinweises auf die Entscheidung über den Einspruch: **16.01.2019**
(45) Hinweis auf die Patenterteilung: 17.06.2015
(21) Anmeldenummer: 11703459.5
(22) Anmeldetag: 15.02.2011
(51) Int. Cl.: A47L 15/00, D06F 33/02, G05B 19/042

(54) **VERFAHREN ZUM BETREIBEN EINES HAUSHALTSGERÄTS UND HAUSHALTSGERÄT**
METHOD FOR OPERATING A HOUSEHOLD APPLIANCE AND HOUSEHOLD APPLIANCE
PROCÉDÉ PERMETTANT DE FAIRE FONCTIONNER UN APPAREIL MÉNAGER ET APPAREIL MÉNAGER

(30) Priorität: 15.03.2010 DE 102010002877
(43) Veröffentlichungstag der Anmeldung: 23.01.2013
(73) Patentinhaber: BSH Hausgeräte GmbH, 81739 München (DE)
(72) Erfinder: ELSHOLZ, Carsten, 82041 Oberhaching (DE); HAMMERL, Günter, 81673 München (DE); THUILLE, Wolfgang, 81929 Muenchen (DE)
(86) Internationale Anmeldenummer: PCT/EP2011/052176
(87) Internationale Veröffentlichungsnummer: WO 2011/113653

(56) Entgegenhaltungen:
- WO-A1-2008/090432
- DE-A1- 10 358 732
- US-A1- 2004 204 780
- US-A1- 2009 205 690

## Beschreibung

Die Erfindung betrifft ein Verfahren zum Betreiben eines Haushaltsgeräts mit mindestens zwei elektrischen Verbrauchern, wobei die Funktion wenigstens eines der elektrischen Verbraucher mittels einer Steuereinrichtung des Haushaltsgeräts geprüft wird. Die Erfindung betrifft außerdem ein Haushaltsgerät mit zumindest zwei elektrischen Verbrauchern und mit einer Steuereinrichtung zum Prüfen der Funktion wenigstens eines der elektrischen Verbraucher.

Es ist Stand der Technik, elektrische Verbraucher eines Haushaltsgeräts auf ihre Funktionsfähigkeit hin automatisch zu überprüfen, nämlich mittels einer Steuereinrichtung. Wird ein Fehler bei der Funktion eines elektrischen Verbrauchers durch die Steuereinrichtung festgestellt, so kann die Steuereinrichtung den Betrieb des Haushaltsgeräts unterbrechen, und es kann eine Fehlermeldung ausgegeben werden. Durch eine solche Fehlermeldung wird die Bedienperson des Haushaltsgeräts in der Regel darüber informiert, dass ein ordnungsgemäßer Betrieb des Haushaltsgeräts nicht möglich ist. Ein Kundendiensteinsatz ist in einem solchen Fall erforderlich. Bei modernen Haushaltsgeräten, die über eine komplizierte Technik verfügen, wird das Kundendienstpersonal auch bei scheinbar trivialen Fehlern vor eine schwer lösbare Aufgabe gestellt, ein fehlerhaftes Bauteil des Haushaltsgeräts aufzufinden. Insbesondere bei solchen Haushaltsgeräten, die über einen internen Kommunikationsbus verfügen, an welchen eine Vielzahl von Mikroprozessoren angeschlossen sind, ist das Auffinden des fehlerhaften Bauteils besonders schwierig: Ist zum Beispiel beim Ausfall der Funktion des Heizens in einem Haushaltsgerät die Heizung selbst defekt, eine Hauptsteuereinrichtung oder ein Busteilnehmer, an welchen die Heizung angeschlossen ist? Als Folge dieser Unsicherheit erhöht sich die Anzahl der Bauteile, die durch einen Techniker untersucht werden sollen. Es entsteht ein erhöhter Diagnose-Aufwand vor Ort mit dem Risiko einer Zweitanfahrt und den damit verbundenen Kosten.

Dieser Problematik begegnet ein in der Druckschrift DE 103 58 732 A1 beschriebenes Haushaltsgerät. Dieses umfasst einen Sensor, welcher einen Betriebsparameter des Haushaltsgeräts erfasst. In einem Speicher des Haushaltsgeräts werden die Werte des Betriebsparameters periodisch aufgezeichnet. Über eine Schnittstelle des Haushaltsgeräts werden die abgelegten Werte des Betriebsparameters ausgelesen, nämlich im Falle einer Störung. Anhand der gespeicherten Werte des Betriebsparameters kann auf eine mögliche Störungsursache rückgeschlossen werden.

Im Gegenstand gemäß Druckschrift DE 100 56 491 A1 wird ein Haushaltsgerät an ein Netzwerk angeschlossen. Das Haushaltsgerät kann eine Meldung an einen Dienstanbieter übermitteln, nämlich über das Netzwerk. Mit dieser Meldung wird der Dienstanbieter über eine technische Störung im Haushaltsgerät informiert. Die vom Haushaltsgerät ausgesandte Meldung beinhaltet die Modellbezeichnung des Haushaltsgeräts, wie auch weitere gerätespezifische Angaben.

Die Druckschrift DE 198 35 622 A1 beschreibt ein Haushaltsgerät, welches ein elektrisches Heizelement umfasst. Es ist eine Überwachungseinrichtung im Haushaltsgerät bereitgestellt, welche den elektrischen Widerstandswert des Heizelements überwacht, nämlich während des Betriebs des Heizelements. Es wird eine Fehlermeldung dann erzeugt, wenn der elektrische Widerstand gegen Unendlich oder gegen Null geht. Im ersten Falle ist das Heizelement defekt oder durchgebrannt, während im letzteren Falle das Heizelement einen elektrischen Kurzschluss aufweist. Die Widerstandswerte des Heizelements können auch in einem Speicher des Haushaltsgeräts abgelegt werden; dies ermöglicht eine spätere Diagnose von Fehlerursachen, wie auch ein späteres Auffinden von Fehlerquellen.

Die Druckschrift WO 2008/090432 A1 beschreibt ein System mit einem Haushaltsgerät sowie einem Hilfsgerät. Das Haushaltsgerät kann über das Hilfsgerät an ein elektrisches Stromnetz angeschlossen werden. Das Haushaltsgerät beinhaltet eine Vielzahl von elektrischen Verbrauchern, welche auf ihre Funktionsfähigkeit hin überprüft werden können. Es kann die jeweilige elektrische Spannung erfasst werden, welche an den elektrischen Verbraucher abfällt.

Aus dem Dokument US 2009/0205690 A1 ist eine Diagnoseeinrichtung für ein Waschgerät bekannt. Mittels der Diagnoseeinrichtung wird der Bedienperson bzw. einem Kundendienst angezeigt, an welcher Stelle im Waschgerät eine Fehlerquelle vorhanden ist. Eine derartige Diagnoseeinrichtung kann grundsätzlich in ein Waschgerät integriert werden, etwa in eine Geschirrspülmaschine.

Es ist Aufgabe der vorliegenden Erfindung, eine Lösung aufzuzeigen, wie das Auffinden von Fehlerquellen für einen Kundendienst im Vergleich zum Stand der Technik noch weiter vereinfacht werden kann.

Diese Aufgabe wird erfindungsgemäß durch ein Verfahren mit den Merkmalen gemäß Patentanspruch 1, wie auch durch ein Haushaltsgerät mit den Merkmalen gemäß Patentanspruch 13 gelöst. Vorteilhafte Ausführungen der Erfindung sind Gegenstand der abhängigen Patentansprüche und der Beschreibung.

Bei einem erfindungsgemäßen Verfahren zum Betreiben eines Haushaltsgeräts mit zumindest zwei elektrischen Verbrauchern wird die Funktion wenigstens eines der elektrischen Verbraucher mittels einer Steuereinrichtung überprüft. Nach Auffinden eines Fehlers des geprüften elektrischen Verbrauchers erzeugt die Steuereinrichtung eine Fehlerinformation, durch welche der fehlerhafte elektrische Verbraucher eindeutig bezeichnet - also gekennzeichnet - ist.

Also wird erfindungsgemäß durch die Steuereinrichtung eine solche Fehlerinformation bzw. eine solche Fehlernachricht generiert, welche eine eindeutige Information über den fehlerhaften elektrischen Verbraucher beinhaltet. Die Fehlerinformation kann beispielsweise eine exakte Modellbezeichnung und/oder eine Seriennummer des fehlerhaften Verbrauchers und/oder oder seine Produktnummer und/oder seinen Typ und/oder seine Anordnung im Inneren des Haushaltsgeräts beinhalten. Durch eine solche Fehlerinformation wird der Techniker darüber informiert, welcher der elektrischen Verbraucher tatsächlich defekt ist bzw. nicht ordnungsgemäß funktioniert. Der Techniker muss nicht alle im Haushaltsgerät vorhandenen Verbraucher separat überprüfen; er kann sich auf die erzeugte Fehlerinformation verlassen und den fehlerhaften elektrischen Verbraucher austauschen bzw. reparieren. Einerseits wird somit das Risiko einer Zweitanfahrt des Technikers mit den damit verbundenen Kosten auf ein Minimum reduziert; andererseits verringert sich der Aufwand einer Diagnose im Vergleich zum Stand der Technik.

Zum Prüfen der Funktion des elektrischen Verbrauchers wird eine an selbigem Verbraucher abfallende elektrische Spannung erfasst und ausgewertet. Dann können Rückschlüsse darauf gezogen werden, ob der elektrische Verbraucher mit dem Versorgungsnetz gekoppelt ist oder nicht bzw. ob die Versorgungsspannung an dem Verbraucher anliegt oder nicht. Es kann somit auch der Schaltzustand eines elektrischen Schalters überprüft werden, über welchen der Verbraucher mit dem Versorgungsnetz gekoppelt wird.

Die an den zumindest zwei elektrischen Verbrauchern abfallenden jeweiligen elektrischen Spannungen werden über einen gemeinsamen Eingang der Steuereinrichtung erfasst. Für die Erfassung der elektrischen Spannungen ist somit lediglich ein einziger Eingang bei der Steuereinrichtung erforderlich; dies führt zu einer kompakten und bauraumsparenden Steuereinrichtung. Eine solche Vorgehensweise ermöglicht auch eine sequentielle Erfassung der Spannungen und somit eine sequentielle Prüfung der jeweiligen Funktionen der elektrischen Verbraucher.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Das kann aber auch ein Haushaltskleingerät sein, wie beispielsweise ein Kaffeevollautomat oder eine Küchenmaschine.

Unter einem elektrischen Verbraucher wird ein aktives Bauteil des Haushaltsgeräts verstanden, welches mit elektrischer Energie versorgt wird. Insbesondere fallen unter den Begriff elektrischen Verbraucher" eine Heizung, ein Antriebsmotor - insbesondere für eine Wäschetrommel, eine Pumpe, ein Gebläse und dergleichen - ein Stellglied, ein Aktuator, eine Anzeigeeinrichtung, eine Bedieneinrichtung und ähnliches. Vorzugsweise werden diesbezüglich solche Bauelement des Haushaltsgerätes verstanden, durch welche die Prozesse des Haushaltsgerätes - insbesondere mechanisch und/oder thermisch - durchgeführt werden.

Es erweist sich als besonders vorteilhaft, wenn die Fehlerinformation durch die Steuereinrichtung in einem Speicher des Haushaltsgeräts gespeichert wird. Der Techniker muss dann in einem Kundendienstfall die einzelnen elektrischen Verbraucher nicht separat untersuchen. Er kann die Fehlerinformation aus dem Speicher auslesen und den fehlerhaften elektrischen Verbraucher austauschen oder reparieren. Es kann somit Zeit bei einem Kundendienstfall gespart werden.

Die Steuereinrichtung kann die Fehlerinformation auch ausgeben, nämlich beispielsweise mithilfe einer optischen Anzeigeeinrichtung und/oder einer akustischen Ausgabeeinrichtung. Ergänzend oder alternativ - wenn das Haushaltsgerät eine Kommunikationsschnittstelle aufweist - kann die Fehlerinformation über diese Kommunikationsschnittstelle an eine von dem Haushaltsgerät entfernte Servicezentrale und/oder an einen an das Haushaltsgerät angeschlossenen Personalcomputer übertragen werden. Es kann sich bei der Kommunikationsschnittstelle zum Beispiel um eine nach einem Standard der IEEE-802.11-Familie (WLAN) und/oder einem Standard der IEEE-802.15-Familie (Bluetooth®) ausgebildete Schnittstelle handeln. Die Kommunikationsschnittstelle kann aber auch - ergänzend oder alternativ - einen Anschluss umfassen, über welchen eine externe Vorrichtung - zum Beispiel ein PC - an das Haushaltsgerät drahtgebunden angeschlossen werden kann. Durch das Ausgeben der Fehlerinformation durch die Steuereinrichtung wird die Bedienperson des Haushaltsgerätes über den fehlerhaften elektrischen Verbraucher informiert; die Bedienperson kann dann bei einer telefonischen Rücksprache mit dem Kundendienst dem Techniker mitteilen, um welches Bauteil es sich bei dem fehlerhaften Verbraucher handelt. Der Techniker kann dann ein entsprechendes Ersatzteil mitnehmen, ohne dass eine Vielzahl von Bauteilen zum Kunden mitgenommen werden müssen. Durch die Übertragung der Fehlerinformation an die Servicezentrale, also an den Kundendienst, wird das Kundendienstpersonal quasi automatisch darüber informiert, welche elektrische Verbraucher des Haushaltsgeräts defekt sind und somit welche Ersatzteile zum Kunden mitgebracht werden sollen. Es entfällt somit die Gefahr, dass falsche Ersatzteile zum Kunden mitgebracht werden, und es können Zeit und Geld gespart werden.

Das Prüfen der Funktion des elektrischen Verbrauchers kann auch durch eine externe Vorrichtung veranlasst werden, nämlich insbesondere einen Personalcomputer und/oder eine entfernte Servicezentrale (Kundendienst). Eine solche externe Vorrichtung kann über die genannte Kommunikationsschnittstelle mit der Steuereinrichtung des Haushaltsgeräts kommunizieren. Dann empfängt die Steuereinrichtung des Haushaltsgeräts ein Steuersignal von der externen Vorrichtung, und der elektrische Verbraucher wird auf seine Funktion hin überprüft. Eine solche Überprüfung von außen wird bevorzugt zusätzlich zu einem Eigentest durchgeführt, der durch die Steuereinrichtung alleine vorgenommen wird. Das Ergebnis der Überprüfung kann dann - wie bereits ausgeführt - von der Steuereinrichtung an die externe Vorrichtung übertragen werden, nämlich über die Kommunikationsschnittstelle. Der Kundendienst und/oder die Bedienperson kann/können somit quasi jederzeit einen Test des elektrischen Verbrauchers veranlassen, ohne auf einen Eigentest des Haushaltsgeräts warten zu müssen.

Bei der Prüfung der Funktion bzw. der Funktionsweise des zumindest einen elektrischen Verbrauchers sind unterschiedlichste Ausführungsformen vorgesehen:
Der zumindest eine elektrische Verbraucher kann beispielsweise vor dem Start eines eigentlichen Prozesses - also zum Beispiel eines Waschprozesses, eines Spülprozesses, eines Trocknungsprozesses und dergleichen - auf seine Funktion hin überprüft werden. Es wird somit quasi ein "Selbsttest" des Haushaltsgerätes beim Einschalten bereitgestellt. Die Prüfung der Funktion des elektrischen Verbrauchers kann beispielsweise unmittelbar nach dem Einschalten des Haushaltsgerätes oder auch unmittelbar nach der Anwahl eines bestimmten Betriebsprogramms des Haushaltsgerätes erfolgen. Eine solche Prüfung kann die Steuereinrichtung innerhalb von Sekundenbruchteilen durchführen. Es wird somit noch vor dem Einleiten des tatsächlichen Prozesses des Haushaltsgeräts sichergestellt, dass der zumindest eine elektrische Verbraucher ordnungsgemäß funktioniert. Auch vor dem Start des Prozesses kann somit gegebenenfalls die Fehlerinformation erzeugt und beispielsweise ausgegeben und/oder gespeichert und/oder an die Servicezentrale übertragen werden. Eine Unterbrechung eines bereits begonnen Prozesses wird somit vermieden. Ergänzend oder alternativ kann eine Überprüfung der Funktion des elektrischen Verbrauchers auch während eines Prozesses des Haushaltsgerätes erfolgen.

Es erweist sich als besonders vorteilhaft, wenn die zumindest zwei elektrischen Verbraucher - insbesondere alle im Haushaltsgerät vorhandenen Verbraucher - sequentiell auf ihre jeweiligen Funktionen durch die Steuereinrichtung geprüft werden. Eine solche Prüfung der elektrischen Verbraucher zeitlich nacheinander erfolgt bevorzugt vor dem Start des tatsächlichen Prozesses des Haushaltsgerätes. Bei einer Verwirklichung dieser Ausführungsform kann beispielsweise ein solches Verfahren im Haushaltsgerät durchgeführt werden: Das Haushaltsgerät weist drei elektrische Verbraucher auf. Die elektrischen Verbraucher können über jeweils einen elektrischen Schalter - zum Beispiel ein Relais - mit einem gemeinsamen elektrischen Schaltungseingang des Haushaltsgerätes bzw. mit einem elektrischen Versorgungsnetz gekoppelt werden. Die Inbetriebnahme der einzelnen elektrischen Verbraucher erfolgt somit durch Schließen des zugeordneten elektrischen Schalters. Die Steuereinrichtung erfasst die jeweiligen an den elektrischen Verbrauchern abfallenden elektrischen Spannungen. Hierzu sind die schaltungstechnischen Knoten, die jeweils zwischen einem elektrischen Verbraucher und dem zugeordneten elektrischen Schalter liegen, mit einem gemeinsamen Eingang der Steuereinrichtung gekoppelt, beispielsweise über einen Gleichrichter und/oder einen Optokoppler. Auch erfasst die Steuereinrichtung einen elektrischen Summenstrom, welcher über die elektrischen Verbraucher fließt. Anhand der jeweiligen Amplitude der elektrischen Spannungen kann die Steuereinrichtung überprüfen, ob der jeweilige Schalter geschlossen oder geöffnet ist. Anhand des Summenstromes kann die Steuereinrichtung feststellen, ob der eingeschaltete elektrische Verbraucher Strom entnimmt und somit elektrische Energie verbraucht oder nicht. Nach dem Einschalten des Haushaltsgerätes und vor dem Einleiten des tatsächlichen Betriebsprozesses überprüft die Steuereinrichtung die Funktionsweise der elektrischen Verbraucher, und zwar sequentiell, also zeitlich nacheinander. Zunächst schließt die Steuereinrichtung einen ersten Schalter und nimmt somit einen ersten der elektrischen Verbraucher in Betrieb. Während der erste Schalter geschlossen bleibt - zum Beispiel für eine Zeitdauer aus einem Wertebereich von 100 ms bis einige Sekunden -, überprüft die Steuereinrichtung die an dem ersten Verbraucher abfallende Spannung sowie den elektrischen Summenstrom, also nun den über den ersten Verbraucher fließenden Strom. Liegt an dem ersten Verbraucher die Netzspannung an, so stellt die Steuereinrichtung fest, dass der erste Schalter ordnungsgemäß geschlossen ist und der erste Verbraucher mit dem Versorgungsnetz gekoppelt ist. Fließt über den ersten Verbraucher elektrischer Strom, so stellt die Steuereinrichtung fest, dass der erste Verbraucher elektrische Energie verbraucht und somit funktionsfähig ist. Die Steuereinrichtung kann auch überprüfen, ob die Stromstärke des Stromes in einem vorgegebenen Wertebereich liegt. Ein solcher Wertebereich kann in der Steuereinrichtung abgelegt sein; durch diesen Wertebereich kann ein Plausibilitätsbereich für die Stromstärke des Stromes festgelegt sein. Es kann für alle elektrischen Verbraucher ein gemeinsamer Wertebereich für die Stromstärke abgelegt sein oder es können unterschiedliche Wertebereiche für die elektrischen Verbraucher abgelegt sein. Erkennt die Steuereinrichtung einen Fehler des ersten Verbrauchers, so erzeugt sie eine Fehlerinformation, die sich exakt auf den ersten Verbraucher bezieht bzw. diesen Verbraucher kennzeichnet. Eine solche Fehlerinformation kann beispielsweise lauten: "Verbraucher 1 defekt" oder "Verbraucher vorne links defekt". Ist hingegen der erste Verbraucher funktionsfähig, so öffnet die Steuereinrichtung den ersten Schalter und schließt anschließend den zweiten Schalter - der zweite Verbraucher wird für eine kurze Zeit in Betrieb genommen und überprüft. Anschließend erfolgt eine entsprechende Überprüfung des dritten Verbrauchers.

Also können zum sequentiellen Prüfen der jeweiligen Funktionen die elektrischen Verbraucher zu unterschiedlichen Zeitpunkten mit einem elektrischen Versorgungsnetz gekoppelt werden. Wie bereits ausgeführt, kann dies durch ein nacheinander folgendes Schließen und Öffnen von einzelnen elektrischen Schaltern erfolgen, über welche die Verbraucher mit dem Versorgungsnetz gekoppelt werden. Durch eine solche sequentielle Kopplung der Verbraucher mit dem elektrischen Versorgungsnetz ist es möglich, die jeweiligen an den Verbrauchern abfallenden Spannungen über einen gemeinsamen Eingang der Steuereinrichtung zu erfassen und auszuwerten. Die Steuereinrichtung kommt somit ohne zusätzliche Eingänge für jeden Verbraucher und kann somit entsprechend kleiner gestaltet werden. Auch die Erfassung des Summenstromes ist bei dieser Ausführungsform ausreichend: Bei einer sequentiellen Prüfung der Verbraucher entspricht der Summenstrom demjenigen, welcher über den geprüften Verbraucher fließt. Es ist somit lediglich eine einzige Stromerfassungseinrichtung erforderlich, wie auch nur ein einzelner Eingang bei der Steuereinrichtung.

Zum Erfassen der elektrischen Spannung wird bevorzugt ein elektrisches Potential durch die Steuereinrichtung an einem Knoten abgegriffen, welcher zwischen dem elektrischen Verbraucher und einem elektrischen Schalter liegt, über welchen der elektrische Verbraucher mit einem elektrischen Versorgungsnetz gekoppelt wird. Auf diesem Wege gelingt es, den Schaltzustand des Schalters durch Auswertung des abgegriffenen Potentials zu überprüfen, wie auch die an dem Verbraucher abfallende Spannung ohne viel Aufwand zu erfassen.

Das Prüfen der Funktion des elektrischen Verbrauchers beinhaltet , dass zumindest eine weitere Größe erfasst und ausgewertet wird, nämlich beispielsweise ein über den elektrischen Verbraucher fließender elektrischer Strom und/oder eine mithilfe eines Sensors des Haushaltsgerätes erfasste Messgröße. Dies erhöht die Genauigkeit der Aussage über die Funktionsfähigkeit des elektrischen Verbrauchers.

Es wird ein über alle elektrischen Verbraucher fließender elektrischer Summenstrom erfasst. Durch Erfassung des Stromes gelingt es, festzustellen, ob der elektrische Verbraucher überhaupt elektrische Energie aufnimmt und somit funktionsfähig ist oder nicht. Durch Messung des Summenstromes kommt die Steuereinrichtung mit lediglich einem einzigen Eingang für die Erfassung des Stromes aus, und das Haushaltsgerät kommt mit lediglich einer einzigen Stromerfassungseinrichtung aus.
Erfolgt die Überprüfung der Funktion während eines Prozesses des Haushaltsgerätes,
so kann diese Uberprüfung beinhalten, dass der zu prüfende elektrische Verbraucher zuoder abgeschaltet wird, während sich zumindest ein anderer elektrischer Verbraucher im Betrieb befindet. Eine bei dem Zu- oder Abschalten auftretende Änderung der Stromstärke des Summenstromes kann dann erfasst und ausgewertet werden. Die Messung des Summenstromes ermöglicht also den Test des elektrischen Verbrauchers auch dann, wenn andere Verbraucher eingeschaltet sind und sich somit im Betrieb befinden. Die Änderung der Stromstärke - nämlich eine Differenz zwischen der Stromstärke vor dem Zu- oder Abschalten und der Stromstärke nach dem Zu- oder Abschalten des Verbrauchers - liefert nämlich eindeutige Hinweise darauf, ob der Verbraucher ordnungsgemäß funktioniert oder nicht.

Der elektrische Strom, insbesondere der Summenstrom, wird bevorzugt mithilfe einer Netzdrossel erfasst, die neben einer Hauptwicklung mit einer Zusatzwicklung ausgebildet wird. Es wird somit zum Erfassen des Stromes eine im Haushaltsgerät ohnehin vorhandene Netzdrossel verwendet. Die Zusatzwicklung kann dann mit der Steuereinrichtung gekoppelt sein, nämlich beispielsweise über einen Gleichrichter und/oder einen Optokoppler. Die Steuereinrichtung kann eine in der Zusatzwicklung induzierte elektrische Spannung auswerten und hierdurch auf den elektrischen Strom rückschließen.

Zusätzlich oder alternativ zu einer speziellen Netzdrossel kann der Strom auch auf eine anderweitige Art und Weise gemessen werden. Zum Beispiel kann ein Phasenleiter und/oder ein Neutralleiter auf einem zusätzlichen Kern aufgewickelt werden, nämlich beispielsweise dreifach. Neben einer solchen Spule kann eine weitere Sekundärspule mit beispielsweise 12 Windungen bereitgestellt werden, über welche dann der Strom abgegriffen werden kann. Die Sekundärspule kann mit der Steuereinrichtung gekoppelt sein. Die Sekundärspule kann beispielsweise eine Anzahl von Windungen aus einem Wertebereich von 8 bis 16 umfassen. Bei einer 1000 Watt Heizung als Verbraucher sind somit Spannungen im Millivolt-Bereich messbar. Durch höhere Windungszahlen kann auch bei Spannungen im Volt-Bereich selbst auf eine Signalverstärkung verzichtet werden. Alternativ zu einer solchen induktiven Kopplung kann auch ein Hall-Sensor eingesetzt werden, und das dem Stromfluss äquivalente Signal kann mithilfe des HallSensors gewonnen werden. Alternativ oder zusätzlich dazu kann auch ein Optokoppler verwendet werden, dessen Leuchtdiode parallel zu einem in der Netzleitung angeordneten Ohmschen Widerstand geschaltet ist und dessen Optotransistor mit der Steuereinrichtung gekoppelt ist. Alle drei Alternativen sorgen für eine zuverlässige und hochgenaue Erfassung des Stromes.

Wie bereits ausgeführt, kann als weitere Größe auch eine Messgröße eines Sensors des Haushaltsgerätes zum Prüfen der Funktion des elektrischen Verbrauchers ausgewertet werden. Und zwar kann es sich bei dem Sensor um einen Temperatursensor handeln - die Messgröße ist dann eine Temperatur. Diese Ausführungsform erweist sich insbesondere bei solchen Haushaltsgeräten als vorteilhaft, die über eine Heizung als Verbraucher verfügen. Zum Beispiel kann bei einem fehlenden Anstieg der Temperatur in einem solchen Haushaltsgerät - zum Beispiel in einem Backofen - und insbesondere nach einem Plausibilitätstest des Temperatursensors die Heizung als eindeutig defekt definiert und eine Fehlerinformation erzeugt werden. Hier kann auch vorausgesetzt werden, dass die Netzspannung an der Heizung anliegt, was durch die Steuereinrichtung erkannt werden kann. Die Auswertung einer Messgröße eines Sensors ermöglicht somit eindeutige Rückschlüsse auf eine Fehlfunktion von elektrischen Verbrauchern, wie beispielsweise von Heizungen.

Ein erfindungsgemäßes Haushaltsgerät umfasst zumindest zwei elektrische Verbraucher und eine Steuereinrichtung zum Prüfen der Funktion wenigstens eines der elektrischen Verbraucher. Die Steuereinrichtung kann nach Auffinden eines Fehlers des geprüften elektrischen Verbrauchers eine Fehlerinformation erzeugen, durch welche der fehlerhafte elektrische Verbraucher eindeutig bezeichnet ist.

Die mit Bezug auf das erfindungsgemäße Verfahren vorgestellten bevorzugten Ausführungsformen und deren Vorteile gelten entsprechend für das erfindungsgemäße Haushaltsgerät.

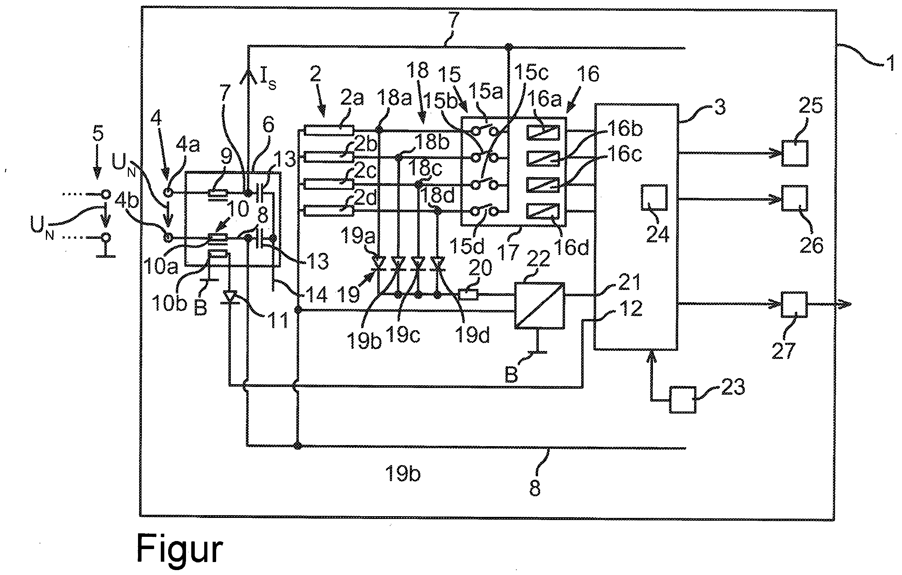

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand eines Ausführungsbeispiels näher erläutert, wie auch unter Bezugnahme auf die Zeichnung. Die einzige Figur veranschaulicht in schematischer Darstellung ein Haushaltsgerät nach einer Ausführungsform der Erfindung, wobei ein Verfahren gemäß einer Ausführungsform der Erfindung unter Bezugnahme auf die Figur nachfolgend näher erläutert wird.

In einem Haushaltsgerät 1 befinden sich eine Vielzahl von elektrischen Verbrauchern 2, die mit elektrischer Energie versorgt werden. Im Ausführungsbeispiel sind im Haushaltsgerät 1 vier Verbraucher 2 gegeben, nämlich ein erster Verbraucher 2a, ein zweiter Verbraucher 2b, ein dritter Verbraucher 2c und ein vierter Verbraucher 2d. Diese Anzahl von elektrischen Verbrauchern 2 ist lediglich beispielhaft. Die Vielzahl von elektrischen Verbrauchern 2 können beispielsweise beinhalten: eine Heizung und/oder einen Antriebsmotor - insbesondere für eine Pumpe und/oder ein Gebläse und/oder eine Wäschetrommel - und/oder ein Stellglied, beispielsweise für einen Türverschluss des Haushaltsgeräts 1. Das Haushaltsgerät 1 kann ein Haushaltsgroßgerät und/oder ein Haushaltskleingerät sein.

Zum Steuern von Prozessen des Haushaltsgeräts 1, also beispielsweise von Waschprozessen und/oder Trocknungsprozessen und/oder Backprozessen und/oder Spülprozessen und ähnlichen Prozessen umfasst das Haushaltsgerät 1 eine Steuereinrichtung 3. Die Steuereinrichtung 3 kann einen Mikrocontroller und/oder einen digitalen Signalprozessor beinhalten. Die Steuereinrichtung 3 dient zum Ein- und Ausschalten der elektrischen Verbraucher 2.

Das Haushaltsgerät 1 umfasst einen elektrischen Schaltungseingang 4 mit einem ersten und einem zweiten Eingangsanschluss 4a, 4b. Der Schaltungseingang 4 kann mit einem externen elektrischen Versorgungsnetz 5 gekoppelt werden, nämlich mithilfe eines in der Figur nicht dargestellten Kabels. Das Versorgungsnetz 5 stellt eine Versorgungswechselspannung U_{N} bereit, welche auch an dem Schaltungseingang 4 zwischen den Eingangsanschlüssen 4a, 4b dann anliegt, wenn der Schaltungseingang 4 mit dem Versorgungsnetz 5 gekoppelt ist.

Zum Begrenzen von elektrischen Störungen von dem Haushaltsgerät 1 in das Versorgungsnetz 5 sowie zum Verbessern der elektromagnetischen Verträglichkeit des Haushaltsgeräts 1 gegen Störungen aus dem Versorgungsnetz 5 umfasst das Haushaltsgerät 1 ein Netzfilter 6. Das Netzfilter 6 ist mit dem Schaltungseingang 4 verbunden. Der erste Eingangsanschluss 4a ist mit einem Phasenleiter 7 verbunden, während der zweite Eingangsanschluss 4b mit einem Neutralleiter bzw. Nullleiter 8 verbunden ist. Sowohl in den Phasenleiter 7, als auch in den Neutralleiter 8 ist jeweils eine Drossel 9, 10 integriert. Eine der Drosseln 9, 10, nämlich im Ausführungsbeispiel die Drossel 10 des Neutralleiters 8, ist derart gestaltet, dass Sie eine im Hauptstromkreis - also im Stromkreis der elektrischen Verbraucher 2 - liegende Hauptwicklung 10a und eine Zusatzwicklung 10b aufweist. Diese Zusatzwicklung 10b dient zum Abgreifen eines Summenstromes I_{S}, welcher über den Schaltungseingang 4 fließt. Die Zusatzwicklung 10b ist einerseits mit einem Bezugspotential B und andererseits über eine Gleichrichtungsdiode 11 mit einem Eingang 12 der Steuereinrichtung 3 gekoppelt. Die Steuereinrichtung 3 kann also eine in der Zusatzwicklung 10b induzierte elektrische Spannung erfassen und auswerten und somit auch den über den Schaltungseingang 4 fließenden Summenstrom I_{S}.

Das Netzfilter 6 umfasst außerdem zwei Y-Kondensatoren 13, die mit einem Schutzleiter 14 verbunden sind.

Die elektrischen Verbraucher 2 sind einerseits mit dem Neutralleiter 8 verbunden. Andererseits sind die elektrischen Verbraucher 2 jeweils über einen zugeordneten elektrischen Schalter 15a, 15b, 15c, 15d mit dem Phasenleiter 7 gekoppelt. Die elektrischen Schalter 15 werden durch die Steuereinrichtung 3 angesteuert, nämlich jeweils mithilfe eines Steuerelements 16a, 16b, 16c, 16d, die beispielsweise Spulen sind. Die elektrischen Schalter 15 mit den jeweiligen zugeordneten Steuerelementen 16 bilden jeweils insgesamt ein Relais. Alle Relais, also alle Schalter 15 und alle Steuerelemente 16, können in dem Haushaltsgerät 1 in ein gemeinsames Bauteil integriert sein, nämlich beispielsweise an einer gemeinsamen Relais-Platte 17 (Relaisbord) angeordnet sein.

Zwischen den elektrischen Verbrauchern 2 und den zugeordneten Schaltern 15 ist jeweils ein Knoten 18a, 18b, 18c, 18d ausgebildet. Die Knoten 18 sind über jeweils eine Gleichrichtungsdiode 19a, 19b, 19c, 19c sowie über einen gemeinsamen Hochohmigen Widerstand 20 mit einem gemeinsamen Eingang 21 der Steuereinrichtung 3 gekoppelt, und zwar über eine Einrichtung 22 zur galvanischen Trennung. Die Einrichtung 22 kann einen Optokoppler umfassen - dann ist eine Leuchtdiode des Optokopplers einerseits mit den Knoten 18 und andererseits mit dem Neutralleiter 8 gekoppelt, und ein Optotransistor des Optokopplers ist einerseits mit dem Eingang 21 der Steuereinrichtung 3 und andererseits mit dem Bezugspotential B verbunden.

Also greift die Steuereinrichtung 3 die jeweiligen elektrischen Potentiale ab, die an den Knoten 18 liegen. Somit kann die Steuereinrichtung 3 die jeweiligen Spannungen erfassen, die an den elektrischen Verbrauchern 2 abfallen. Dies ist beispielsweise bei einer sequentiellen Ansteuerung der Verbraucher 2 möglich.

Die Steuereinrichtung 3 erfasst auch - wie bereits ausgeführt - den Summenstrom I_{S}, welcher über alle Verbraucher 2 fließt. Die Erfassung eines Stromes durch einen einzelnen Verbraucher 2 ist ebenfalls bei einer sequentiellen Ansteuerung der Verbraucher 2 möglich.

Mit der Steuereinrichtung 3 ist ferner ein Sensor 23 gekoppelt. Dieser dient zum Messen einer Messgröße. Beispielsweise kann dieser ein Temperatursensor sein, welcher eine Temperatur misst. Es kann sich beispielsweise um einen Temperatursensor in einem Backofen handeln.

Die Steuereinrichtung 3 kann die Funktion der einzelnen elektrischen Verbraucher 2 überprüfen. Dies kann beispielsweise im Betrieb des Haushaltsgeräts 1, also während eines Prozesses des Haushaltsgeräts 1 erfolgen. Beim Prüfen der Funktion eines der Verbraucher 2 überprüft die Steuereinrichtung 3, ob an diesem Verbraucher die Versorgungswechselspannung U_{N} anliegt oder nicht, und somit ob der entsprechende Schalter 15 geschlossen ist oder nicht. Dann kann die Steuereinrichtung 3 anhand der Stromstärke des Summenstromes I_{S} und/oder anhand der Messwerte des Sensors 23 feststellen, ob der Verbraucher 2 ordnungsgemäß funktioniert oder nicht. Ist der Verbraucher 2 eine Heizung und der Sensor 23 ein Temperatursensor und steigt die Temperatur nicht an und/oder zieht der Verbraucher 2 keinen Strom, so stellt die Steuereinrichtung 3 fest, dass der Verbraucher 2 defekt ist. In einem weiteren Beispiel kann der Verbraucher 2 ein Antriebsmotor sein und der Sensor 23 ein Tachometer zum Messen der Drehzahl des Antriebsmotors. Dann kann die Steuereinrichtung 3 anhand der Messwerte des Sensors 23 und/oder anhand der Stromstärke des Summenstromes I_{S} überprüfen, ob der Antriebsmotor ordnungsgemäß funktioniert.

Sind bei der Funktionsüberprüfung im laufenden Betrieb des Haushaltsgeräts 1 mehrere Verbraucher 2 gleichzeitig am Versorgungsnetz - also gleichzeitig im Betrieb -, so dass die Stromstärke des erfassten Summenstromes I_{S} tatsächlich der Summe der Stromstärken aller Einzelströme entspricht, kann auch der Stromanstieg bzw. Stromabfall - also im Allgemeinen eine Änderung der Stromstärke des Summenstromes I_{S} - beim Zuschalten oder Trennen weiterer Verbraucher 2 Hinweise auf die gewünschte korrekte Funktion geben. Wird also ein zu prüfender Verbraucher 2 zu- oder abgeschaltet, während sich andere Verbraucher 2 im Betrieb befinden, so kann die Änderung der Stromstärke des Summenstromes I_{S} erfasst und ausgewertet werden. Abhängig von dieser Änderung kann die Steuereinrichtung 3 feststellen, ob dieser Verbraucher 2 funktionsfähig ist oder nicht.

Eine Überprüfung der Funktionsweise der Verbraucher 2 kann auch vor dem Start des tatsächlichen Prozesses des Haushaltsgeräts 1 erfolgen. Und zwar kann die Steuereinrichtung 3 die elektrischen Verbraucher 2 sequentiell, also einen nach dem anderen ansteuern und überprüfen. Ein solcher "Selbsttest" kann vor dem Start eines jeden Prozesses durchgeführt werden. Die Steuereinrichtung 3 schließt zunächst den Schalter 15a und wertet die an dem ersten Verbraucher 2a anliegende Spannung, wie auch den Summenstrom I_{S} und/oder die Messwerte des Sensors 23 aus. Nach Öffnen des Schalters 15a schließt die Steuereinrichtung 3 den weiteren Schalter 15b und überprüft die Funktion des zweiten Verbrauchers 2b usw. Nach Überprüfen der jeweiligen Funktionen aller Verbraucher 2 kann der eigentliche Prozess des Haushaltsgeräts 1 begonnen werden.

Nach Auffinden eines Fehlers eines der Verbraucher 2 erzeugt die Steuereinrichtung 3 eine Fehlermeldung bzw. eine Fehlerinformation. Eine solche Fehlerinformation beinhaltet dann eine Information über den fehlerhaften elektrischen Verbraucher 2 und bezeichnet somit den fehlerhaften Verbraucher 2 eindeutig. Dies kann zum Beispiel so aussehen, dass die Fehlerinformation eine Nummer des fehlerhaften Verbrauchers 2 und/oder seinen Typ und/oder seine Anordnung im Haushaltsgerät 1 bezeichnet. Diese Fehlerinformation kann durch die Steuereinrichtung in einem Speicher 24 gespeichert und/oder mithilfe einer optischen Anzeigeeinrichtung 25 - zum Beispiel eines Displays - und/oder mithilfe eines Lautsprechers 26 ausgegeben und/oder über eine Kommunikationsschnittstelle 27 an eine entfernte Servicezentrale bzw. einen Kundendienst übertragen werden. Die Kommunikationsschnittstelle 27 kann dabei zur drahtlosen und/oder zur drahtgebundenen Datenübertragung ausgebildet sein.

Durch eine solche Fehlerinformation, die eindeutig den fehlerhaften Verbraucher kennzeichnet, können Fehlerdiagnosen in einem Kundendienstfall vermieden werden. Der Techniker wird durch die Steuereinrichtung 3 eindeutig darüber informiert, welcher der Verbraucher 2 defekt ist. Es werden insbesondere solche Situationen vermieden, in denen der Techniker durch ein "Ausprobieren" verschiedenere Verbraucher 2 austauschen muss, bis der aufgetretene Fehler im Haushaltsgerät 1 behoben werden kann. Es können somit Zeit und Geld gespart werden. Insbesondere erübrigen sich zusätzliche Anfahrten eines Technikers bei Kunden mit den damit verbundenen Kosten.

Zusätzlich zu dem beschriebenen Eigentest der Verbraucher 2 durch die Steuereinrichtung 3 des Haushaltsgeräts 1 können einzelne Verbraucher 2 auch durch gezielte Ansteuerung von außen geprüft werden, nämlich unter Vermittlung der Kommunikationsschnittstelle 27. Eine externe Vorrichtung - zum Beispiel ein Personalcomputer der Bedienperson oder eines Technikers und/oder ein Computer einer entfernten Servicezentrale (Kundendienst) - kann Steuersignale an die Steuereinrichtung 3 übermitteln, die einen Test zumindest eines Verbrauchers veranlassen. Dies kann entweder drahtgebunden, also über einen Kabel, oder drahtlos erfolgen. Der Kundendienst kann also auch den Test eines elektrischen Verbrauchers durchführen lassen, ohne vor Ort bei dem Haushaltsgerät sein zu müssen. Hier werden bevorzugt weitere sicherheitsbezogene Erfordernisse berücksichtigt. Über die Kommunikationsschnittstelle 27 können die Verbraucher 2 mithilfe eines Prüfprogramms, das auf einem Datenverarbeitungssystem des Kundendienstes läuft, angesteuert werden. Die Messwerte des Summenstromes I_{S} und/oder die Messwerte des Sensors 23 - im Allgemeinen die Messwerte einer Messgröße - können an die externe Vorrichtung - also an den Kundendienst und/oder den Personalcomputer - übermittelt werden. Solche gezielte Tests können genaue Informationen über die Art und Weise der Defekte und der Ersatzteile liefern.

Anstatt einer speziellen Drossel 10, wie sie zum Messen des Summenstromes I_{S} verwendet wird und in der Figur dargestellt ist, kann der Summenstrom I_{S} auch auf eine anderweitige Art und Weise gemessen werden. Und zwar kann der Phasenleiter 7 und/oder der Neutralleiter 8 auf einem zusätzlichen Kern aufgewickelt werden, nämlich beispielsweise dreifach, vierfach oder fünffach. Neben einer solchen "Primärspule" kann eine Sekundärspule mit beispielsweise 12 Windungen bereitgestellt werden, über welche dann die den Strömen entsprechenden Spannungen abgegriffen werden können. Eine weitere Alternative stellen ein Hall-Sensor und/oder ein Optokoppler dar.

### Bezugszeichenliste

- 1: Haushaltsgerät
- 2, 2a, 2b, 2c, 2d: elektrischer Verbraucher
- 3: Steuereinrichtung
- 4: Schaltungseingang
- 4a, 4b: Eingangsanschlüsse
- 5: elektrisches Versorgungsnetz
- 6: Netzfilter
- 7: Phasenleiter
- 8: Neutralleiter
- 9, 10: Drosseln
- 10a: Hauptwicklung
- 10b: Zusatzwicklung
- 11: Gleichrichtungsdiode
- 12: Y-Kondensatoren
- 13: Schutzleiter
- 15, 15a, 15b, 15c, 15d: elektrische Schalter
- 16, 16a, 16b, 16c, 16d: Steuerelemente
- 17: Relais-Platte
- 18, 18a, 18b, 18c, 18d: Knoten
- 19, 19a, 19b, 19c, 19d: Gleichrichtungsdioden
- 20: Ohmscher Widerstand
- 21: Eingang
- 22: Einrichtung zur galvanischen Trennung
- 23: Sensor
- 24: Speicher
- 25: Anzeigeeinrichtung
- 26: Lautsprecher
- 27: Kommunikationsschnittstelle
- U_{N}: Versorgungswechselspannung
- I_{S}: Summenstrom
- B: Bezugspotential

## Patentansprüche

1. Verfahren zum Betreiben eines Haushaltsgerätes (1) mit zumindest zwei elektrischen Verbrauchern (2), wobei die Funktion wenigstens eines der elektrischen Verbraucher (2) mittels einer Steuereinrichtung (3) des Haushaltsgeräts (1) geprüft wird, wobei nach Auffinden eines Fehlers des geprüften elektrischen Verbrauchers (2) eine Fehlerinformation durch die Steuereinrichtung (3) erzeugt wird, durch welche der fehlerhafte elektrische Verbraucher (2) eindeutig bezeichnet ist, wobei das Prüfen der Funktion des elektrischen Verbrauchers (2) beinhaltet, dass eine an diesem Verbraucher (2) abfallende elektrische Spannung erfasst und ausgewertet wird, wobei die an den zumindest zwei elektrischen Verbrauchern (2) abfallenden jeweiligen elektrischen Spannungen über einen gemeinsamen Eingang (21) der Steuereinrichtung (3) erfasst werden, **dadurch gekennzeichnet, dass** das Prüfen der Funktion des elektrischen Verbrauchers (2) beinhaltet, dass zumindest eine weitere Größe (I_{S}) erfasst und ausgewertet wird, wobei als weitere Größe ein über den elektrischen Verbraucher (2) fließender elektrischer Strom (I_{S}) erfasst und zum Prüfen des elektrischen Verbrauchers (2) ausgewertet wird, wobei während eines Prozesses des Haushaltsgerätes (1) der zumindest eine elektrische Verbraucher (2) auf seine Funktion hin überprüft wird und dieses Prüfen beinhaltet, dass der zu prüfende elektrische Verbraucher (2) zu- oder abgeschaltet wird, während sich zumindest ein anderer elektrischer Verbraucher im Betrieb befindet, und eine bei dem Zuoder Abschalten auftretende Änderung der Stromstärke des Summenstromes (I_{S}) erfasst und zum Prüfen des elektrischen Verbrauchers (2) ausgewertet wird.

2. Verfahren nach Anspruch 1, **dadurch gekennzeichnet, dass** die Fehlerinformation durch die Steuereinrichtung (3) in einem Speicher (24) gespeichert wird.

3. Verfahren nach Anspruch 1 oder 2, **dadurch gekennzeichnet, dass** die Fehlerinformation durch die Steuereinrichtung (3) ausgegeben und/oder über eine Kommunikationsschnittstelle (27) des Haushaltsgeräts (1) an eine von dem Haushaltsgerät (1) entfernte Servicezentrale übertragen wird.

4. Verfahren nach einem der vorhergehenden Ansprüche, **dadurch gekennzeichnet, dass** das Prüfen der Funktion des elektrischen Verbrauchers (2) durch eine zum Haushaltsgerät (1) separate externe Vorrichtung veranlasst wird, die mit der Steuereinrichtung (3) über eine Kommunikationsschnittstelle (27) des Haushaltsgeräts (1) kommuniziert.

5. Verfahren nach einem der vorhergehenden Ansprüche, **dadurch gekennzeichnet, dass** vor dem Start eines Prozesses des Haushaltsgerätes (1) der zumindest eine elektrische Verbraucher (2) auf seine Funktion hin überprüft wird.

6. Verfahren nach einem der vorhergehenden Ansprüche, **dadurch gekennzeichnet, dass** die zumindest zwei elektrischen Verbraucher (2) sequentiell auf ihre jeweiligen Funktionen geprüft werden.

7. Verfahren nach Anspruch 6, **dadurch gekennzeichnet, dass** vor dem Start eines Prozesses des Haushaltsgerätes (1) die zumindest zwei elektrischen Verbraucher (2) sequentiell auf ihre jeweiligen Funktionen geprüft werden.

8. Verfahren nach Anspruch 6 oder 7, **dadurch gekennzeichnet, dass** zum sequentiellen Prüfen der jeweiligen Funktionen die elektrischen Verbraucher (2) zu unterschiedlichen Zeitpunkten mit einem elektrischen Versorgungsnetz (5) gekoppelt werden.

9. Verfahren nach einem der vorhergehenden Ansprüche, **dadurch gekennzeichnet, dass** zum Erfassen der elektrischen Spannung ein elektrisches Potential durch die Steuereinrichtung (3) an einem Knoten (18) abgegriffen wird, welcher zwischen dem elektrischen Verbraucher (2) und einem elektrischen Schalter (15) liegt, über welchen der elektrische Verbraucher (2) mit einem elektrischen Versorgungsnetz (5) gekoppelt wird.

10. Verfahren nach einem der vorhergehenden Ansprüche, **dadurch gekennzeichnet, dass** als weitere Größe ein über alle elektrischen Verbraucher (2) fließender Verbrauchers (2) ausgewertet wird.

11. Verfahren nach einem der vorhergehenden Ansprüche, **dadurch gekennzeichnet, dass** der elektrische Strom (I_{S}) mithilfe einer Netzdrossel (9, 10) erfasst wird, die neben einer Hauptwicklung (10a) mit einer Zusatzwicklung (10b) ausgebildet wird.

12. Verfahren nach einem der vorhergehenden Ansprüche, **dadurch gekennzeichnet, dass** als weitere Größe eine Messgröße eines Sensors (23) des Haushaltsgeräts (1) ausgewertet wird.

13. Haushaltsgerät (1) mit zumindest zwei elektrischen Verbrauchern (2) und mit einer Steuereinrichtung (3) zum Prüfen der Funktion wenigstens eines der elektrischen Verbraucher (2), wobei die Steuereinrichtung (3) dazu eingerichtet ist, nach Auffinden eines Fehlers des geprüften elektrischen Verbrauchers (2) eine Fehlerinformation zu erzeugen, durch welche der fehlerhafte elektrische Verbraucher (2) eindeutig bezeichnet ist, wobei die Steuereinrichtung (3) dazu eingerichtet ist, zum Prüfen der Funktion des elektrischen Verbrauchers (2) eine an diesem Verbraucher (2) abfallende elektrische Spannung zu erfassen und auszuwerten, wobei ein gemeinsamer Eingang (21) der Steuereinrichtung (3) zur Erfassung der an den zumindest zwei elektrischen Verbrauchern (2) abfallenden jeweiligen elektrischen Spannungen vorgesehen ist, **dadurch gekennzeichnet, dass** die Steuereinrichtung (3) dazu eingerichtet ist, zum Prüfen der Funktion des elektrischen Verbrauchers (2) zumindest eine weitere Größe (I_{S}) zu erfassen und auszuwerten, wobei als weitere Größe ein über den elektrischen Verbraucher (2) fließender elektrischer Strom (I_{S}) erfasst und zum Prüfen des elektrischen Verbrauchers (2) ausgewertet wird, wobei die Steuereinrichtung (3) weiter dazu eingerichtet ist, während eines Prozesses des Haushaltsgerätes (1) zumindest einen elektrischen Verbraucher (2) auf seine Funktion hin zu überprüfen durch Zu- und Abschalten, während sich zumindest ein anderer elektrischer Verbraucher im Betrieb befindet, wobei eine bei dem Zu- oder Abschalten auftretende Änderung der Stromstärke des Summenstromes (I_{S}) erfasst und zum Prüfen des elektrischen Verbrauchers (2) ausgewertet wird.

## Claims

1. Method for operating a domestic appliance (1) having at least two electrical loads (2), wherein the function of at least one of the electrical loads (2) is checked by means of a control facility (3) of the domestic appliance (1), wherein after locating a fault in the checked electrical load (2), an item of fault information is produced by the control facility (3), by means of which the faulty electrical load (2) is identified clearly, wherein the checking of the function of the electrical load (2) involves acquiring an electrical voltage dropping at this load (2) and evaluating the same, wherein the respective electrical voltages dropping at the at least two electrical loads (2) are acquired by way of a shared input (21) of the control facility (3), **characterised in that** the checking of the function of the electrical load (2) involves at least one further variable (*Iₛ*) being acquired and evaluated, wherein an electrical current (*Iₛ*) flowing across the electrical load (2) is acquired as a further variable and evaluated in order to check the electrical load (2), wherein during a process of the domestic appliance (1) the at least one electrical load (2) is checked in terms of its function and this checking involves the electrical load (2) to be checked being switched on or off, while at least one other electrical load is in operation and a change in the current intensity of the total current (*Iₛ*) which occurs during the switching on or off is acquired and evaluated in order to check the electrical load (2).

2. Method according to claim 1, **characterised in that** the fault information is stored in a memory (24) by the control facility (3).

3. Method according to claim 1 or 2, **characterised in that** the fault information is output by the control facility (3) and/or is transmitted via a communication interface (27) of the domestic appliance (1) to a service centre which is remote from the domestic appliance (1).

4. Method according to one of the preceding claims, **characterised in that** the checking of the function of the electrical load (2) is triggered by an external apparatus which is separate from the domestic appliance (1), said external apparatus communicating with the control facility (3) via a communication interface (27) of the domestic appliance (1).

5. Method according to one of the preceding claims, **characterised in that** prior to the start of a process of the domestic appliance (1), the at least one electrical load (2) is checked in terms of its function.

6. Method according to one of the preceding claims, **characterised in that** the at least two electrical loads (2) are checked sequentially in terms of their respective functions.

7. Method according to claim 6, **characterised in that** prior to the start of a process of the domestic appliance (1), the at least two electrical loads (2) are checked sequentially in terms of their respective functions.

8. Method according to claim 6 or 7, **characterised in that** in order to sequentially check the respective functions, the electrical loads (2) are coupled to an electrical power supply (5) at different points in time.

9. Method according to one of the preceding claims, **characterised in that** in order to acquire the electrical voltage, an electrical potential is tapped by the control facility (3) at a node (18), which lies between the electrical load (2) and an electrical switch (15), by way of which the electrical load (2) is coupled to an electrical power supply (5).

10. Method according to one of the preceding claims, **characterised in that** a total electrical current (*Iₛ*) flowing across all electrical loads (2) is acquired as a further variable and is evaluated in order to check the electrical load (2).

11. Method according to one of the preceding claims, **characterised in that** the electrical current (*Iₛ*) is acquired with the aid of a power choke (9, 10), which is embodied with an additional winding (10b) in addition to a main winding (10a).

12. Method according to one of the preceding claims, **characterised in that** a measurement variable of a sensor (23) of the domestic appliance (1) is evaluated as a further variable.

13. Domestic appliance (1) having at least two electrical loads (2) and a control facility (3) for checking the function of at least one of the electrical loads (2), wherein the control facility (3) is configured to produce an item of fault information after locating a fault in the checked electrical load (2), by means of which the faulty electrical load (2) is identified clearly, wherein the control facility (3) is configured to acquire an electrical voltage dropping at this load (2), in order to check the function of the electrical load (2) and to evaluate the same, wherein a shared input (21) of the control facility (3) is provided in order to acquire the respective electrical voltages dropping at the at least two electrical loads (2), **characterised in that** the control facility (3) is configured to acquire and evaluate at least one further variable (*Iₛ*) in order to check the function of the electrical load (2), wherein an electrical current (*Iₛ*) flowing across the electrical load (2) is acquired as a further variable and evaluated in order to check the electrical load (2), wherein the control facility (3) is further configured, during a process of the domestic appliance (2), to check at least one electrical load (2) in terms of its function by switching it on or off, while at least one other electrical load is in operation, wherein a change in the current intensity of the total current (*Iₛ*) which occurs during the switching on or off is acquired and evaluated in order to check the electrical load (2).

## Revendications

1. Procédé de fonctionnement d'un appareil ménager (1) comprenant au moins deux consommateurs électriques (2), le fonctionnement au moins de l'un des consommateurs électriques (2) étant vérifié à l'aide d'un dispositif de commande (3) de l'appareil ménager(1), une information d'erreur étant générée au moyen du dispositif de commande (3) après qu'une erreur du consommateur électrique (2) vérifié ait été trouvée, au moyen de laquelle information d'erreur le consommateur électrique (2) défectueux est désigné de manière univoque, la vérification du fonctionnement du consommateur électrique (2) impliquant qu'une tension électrique baissant sur ce consommateur (2) soit enregistrée et évaluée, les tensions électriques respectives baissant sur les au moins deux consommateurs électriques (2) étant enregistrées par l'intermédiaire d'une entrée commune (21) du dispositif de commande (3), **caractérisé en ce que** la vérification du fonctionnement du consommateur électrique (2) implique qu'au moins une grandeur supplémentaire (Iₛ) soit enregistrée et évaluée, un courant électrique (Iₛ) circulant par l'intermédiaire du consommateur électrique (2) étant enregistré comme grandeur supplémentaire et étant évalué pour la vérification du consommateur électrique (2), le fonctionnement de l'au moins un consommateur électrique (2) étant vérifié pendant un processus de l'appareil ménager (1), et cette vérification impliquant que le consommateur électrique (2) à vérifier soit mis en ou hors service pendant qu'au moins un autre consommateur électrique se trouve en service, et qu'une modification de l'intensité de courant du courant total (Iₛ) se produisant lors de la mise en ou hors service soit enregistrée et évaluée pour vérifier le consommateur électrique (2).

2. Procédé selon la revendication 1, **caractérisé en ce que** l'information d'erreur est mémorisée dans une mémoire (24) par le dispositif de commande (3).

3. Procédé selon la revendication 1 ou 2, **caractérisé en ce que** l'information d'erreur est sortie par le dispositif de commande (3) et/ou transmise par l'intermédiaire d'une interface de communication (27) de l'appareil ménager (1) à une centrale de service éloignée de l'appareil ménagé (1).

4. Procédé selon l'une quelconque des revendications précédentes, **caractérisé en ce que** la vérification du fonctionnement du consommateur électrique (2) est causée par un dispositif externe séparé de l'appareil ménager (1), lequel dispositif externe communique avec le dispositif de commande (3) par l'intermédiaire d'une interface de communication (27) de l'appareil ménager (1).

5. Procédé selon l'une quelconque des revendications précédentes, **caractérisé en ce qu'**avant le départ d'un processus de l'appareil ménager (1), le fonctionnement de l'au moins un consommateur électrique (2) est vérifié.

6. Procédé selon l'une quelconque des revendications précédentes, **caractérisé en ce que** les fonctionnements respectifs des au moins deux consommateurs électriques (2) sont vérifiés de manière séquentielle.

7. Procédé selon la revendication 6, **caractérisé en ce qu'**avant le départ d'un processus de l'appareil ménager (1), les fonctionnements respectifs des au moins deux consommateurs électriques (2) sont vérifiés de manière séquentielle.

8. Procédé selon la revendication 6 ou 7, **caractérisé en ce que** pour la vérification séquentielle des fonctionnements respectifs, les consommateurs électriques (2) sont couplés à un réseau d'alimentation électrique (5) à différents moments.

9. Procédé selon l'une quelconque des revendications précédentes, **caractérisé en ce que** pour enregistrer la tension électrique, un potentiel électrique est pris sur un noeud (18) par le dispositif de commande (3), lequel noeud est situé entre le consommateur électrique (2) et un commutateur électrique (15), par l'intermédiaire duquel le consommateur électrique (2) est couplé à un réseau d'alimentation électrique (5).

10. Procédé selon l'une quelconque des revendications précédentes, **caractérisé en ce qu'**un courant total électrique (Iₛ) circulant par l'intermédiaire de tous les consommateurs électriques (2) est enregistré en tant que grandeur supplémentaire et est évalué pour vérifier le consommateur électrique (2).

11. Procédé selon l'une quelconque des revendications précédentes, **caractérisé en ce que** le courant électrique (Iₛ) est enregistré à l'aide d'une bobine de réseau (9, 10), qui, outre un enroulement principal (10a), est formée par un enroulement supplémentaire (10b).

12. Procédé selon l'une quelconque des revendications précédentes, **caractérisé en ce qu'**une grandeur de mesure d'un capteur (23) de l'appareil ménager (1) est évaluée en tant que grandeur supplémentaire.

13. Appareil ménager (1) comprenant au moins deux consommateurs électriques (2) et comprenant un dispositif de commande (3) destiné à vérifier le fonctionnement au moins de l'un des consommateurs électriques (2), le dispositif de commande (3) étant configuré pour générer une information d'erreur après qu'une erreur du consommateur électrique (2) vérifié ait été trouvée, au moyen de laquelle information d'erreur le consommateur électrique (2) défectueux est désigné de manière univoque, le dispositif de commande (3) étant configuré, dans le but de vérifier le fonctionnement du consommateur électrique (2), pour enregistrer une tension électrique baissant sur ce consommateur (2) et l'évaluer, une entrée commune (21) du dispositif de commande (3) étant ménagée pour enregistrer les tensions électriques respectives baissant sur les au moins deux consommateurs électriques (2), **caractérisé en ce que** le dispositif de commande (3) est configuré, dans le but de vérifier le fonctionnement du consommateur électrique (2), pour enregistrer une grandeur supplémentaire (Iₛ) et l'évaluer, un courant électrique (Iₛ) circulant par l'intermédiaire du consommateur électrique (2) étant enregistré comme grandeur supplémentaire et évalué pour la vérification du consommateur électrique (2), le dispositif de commande (3) étant en outre configuré, pendant un processus de l'appareil ménager (1), pour vérifier le fonctionnement d'au moins un consommateur électrique (2) en le mettant en et hors service pendant qu'au moins un autre consommateur électrique se trouve en service, une modification de l'intensité de courant du courant total (Iₛ) se produisant lors de la mise en et hors service étant enregistrée et évaluée pour vérifier le consommateur électrique (2).
